# EUROPÄISCHE PATENTSCHRIFT

(11) **EP 2 805 812 B1**
(45) Veröffentlichungstag und Bekanntmachung des Hinweises auf die Patenterteilung: **20.01.2016**
(21) Anmeldenummer: 14157983.9
(22) Anmeldetag: 06.03.2014
(51) Int. Cl.: B32B 5/02, B32B 7/12, B32B 25/00, B32B 25/10

(54) **Mehrschichtige Stoffbahn, insbesondere Faltenbalg, mit flammhemmenden Eigenschaften**
Multi-layered sheet of material, in particular bellows, with flame retardant properties
Bande de tissu multicouches, notamment soufflet, ayant des propriétés ignifuges

(30) Priorität: 24.05.2013 DE 102013105351; 16.10.2013 DE 102013111421
(43) Veröffentlichungstag der Anmeldung: 26.11.2014
(73) Patentinhaber: ContiTech Elastomer-Beschichtungen GmbH, 30165 Hannover (DE)
(72) Erfinder: Löschner, Jens, 37120 Bovenden (DE); Passon-Wesseloh, Barbara, 37073 Göttingen (DE); Stampfer, Bernd, 37154 Northeim (DE)
(74) Vertreter: Preusser, Andrea

(56) Entgegenhaltungen:
- WO-A1-2008/071604
- DE-T2- 69 027 214
- GB-A- 2 230 255
- DATABASE WPI Week 200449 Thomson Scientific, London, GB; AN 2004-510751 XP002730304, & JP 2004 174869 A (KANBO PRAS CORP) 24. Juni 2004 (2004-06-24)
- DATABASE WPI Week 201305 Thomson Scientific, London, GB; AN 2012-M65730 XP002730305, & TW 201 132 504 A (FORMOSAN RUBBER GROUP INC) 1. Oktober 2011 (2011-10-01)

## Beschreibung

Die Erfindung betrifft eine mehrschichtige Stoffbahn, insbesondere einen Faltenbalg, der flammhemmend ausgestattet ist.

Besondere Bedeutungen haben mehrschichtige Stoffbahnen zur Bildung von flexiblen Behältern, Zelten, Planen, Membranen, Schutzanzügen, Faltenbälgen und dergleichen. Diese Stoffbahnen weisen wenigstens eine Festigkeitsträgerschicht in Form einer Gewebeschicht auf, die in Gummi eingebettet ist. Man nennt diese Stoffbahnen daher auch gummierte Gewebe.
Diese gummierten Gewebe müssen in der Regel bestimmten Anforderungen hinsichtlich Flamm- und Brandschutz genügen, wie bspw. in WO 2008/071604A1 beschrieben. Hierzu ist es unter anderem bekannt, Antimontrioxid als Flammschutzmittel einzusetzen.
Antimontrioxid wirkt als Synergist in Kombination mit halogenhaltigen Flammschutzmitteln. Der Wirkmechanismus halogenhaltiger Flammschutzmittel beruht auf einer Unterbrechung der Radikalkettenmechanismen während des Verbrennungsprozesses in der Gasphase. Antimontrioxid als Synergist erleichtert unter thermischer Belastung den Zerfall von halogenierten Verbindungen durch die Bildung von halogenierten Antimonverbindungen, die wiederum mit den OH- und H-Radikalen in der Flamme reagieren. Halogenierte Flammschutzmittel haben den Nachteil, dass bei der Verbrennung polyhalogenierte Verbindungen entstehen. Diese wirken toxisch, sind biologisch schlecht abbaubar und reichern sich in der Nahrungsektte an. Antimontrioxid wird als möglicherweise krebserzeugende Substanz für den Menschen eingestuft, deshalb müssen besondere Sicherheitsmaßnahmen für den Umgang (z. B. Abwiegen) mit Antimontrioxid getroffen werden. Bei der Verbrennung entstehen in herkömmlichen Systemen flüchtige Antimonchloride, die Verätzungen der Haut und Augenschäden verursachen können. Antimon steht an 61. Stelle der Elementhäufigkeit in der Erdhülle eine Abhängigkeit von Rohstoffpreisen und Rohstoffverknappung ist gegeben. Insbesondere in der Bau- und Kabelindustrie ist es bereits bekannt, alternative flammhemmende Substanzen, bspw. für PE- und / oder PVC-Kabel oder zur Herstellung von Brandschutzbeschichtungen und Brandschutzabschlüssen an Gebäuden, zu verwenden, siehe u.a. GB 2 230 255 A, DE 690 27 214 T2 oder DE 41 42 903 A1. Aus DE 696 03 731 T2 ist bekannt, anorganische Füllstoffe für PVC- oder PE-haltige Polymermischungen mit Flammschutzmitteln zu beschichten. Hierbei handelt es sich um einschichtige Systeme, bei denen die Haftung einzelner Schichten zueinander keine Rolle spielt. Für mehrschichtige Systeme gestaltete sich daher in der Vergangenheit die Auswahl geeigneter alternativer Flammschutzmittel aufgrund der etwaigen Haftungsprobleme der Schichten zueinander schwierig.

Aufgabe der Erfindung ist es nun, eine mehrschichtige Stoffbahn, insbesondere einen Faltenbalg, mit wenigstens einer Festigkeitsträgerschicht und wenigstens einer Kautschukschicht, bereitzustellen, die sich durch zum Stand der Technik gleiche oder verbesserte physikalische Eigenschaften der Kautschukmischung und gleiche oder verbesserte Flammschutzeigenschaften der mehrschichtigen Stoffbahn auszeichnet. Gleichzeitig soll die Haftung zu der Festigkeitsträgerschicht verbessert werden.

Die Aufgabe wird dadurch gelöst, dass die mehrschichtige Stoffbahn wenigstens eine Schicht auf Basis wenigstens eines Kautschuks und wenigstens eines Flammschutzmittels enthält, wobei das Flammschutzmittel frei von Halogenen bzw. Halogenverbindungen und frei von Antimon bzw. Antimonverbindungen ist.

Überraschenderweise hat sich gezeigt, dass der Einsatz von halogenfreien und antimonfreien Flammschutzmitteln in wenigstens einer Kautschukmischung einer mehrschichtigen Stoffbahn, gleiche oder bessere physikalische Eigenschaften der Kautschukmischung ergibt, während gleichzeitig die Flammschutzeigenschaften der mehrschichtigen Stoffbahn gleich oder besser wurden. Sehr überraschend ergibt sich durch derartige Flammschutzmittel eine gleiche oder bessere Haftung zwischen Festigkeitsträger und den in der mehrschichtigen Stoffbahn vorhandenen Kautschukschichten, d.h. Schichten auf Basis wenigstens eines Kautschuks.
Derartige Flammschutzmittel lassen sich somit als Alternative zu dem gängigen und oben erwähnten Antimontrioxid verwenden. Da die erfindungsgemäß eingesetzten Flammschutzmittel halogenfrei sind, lässt sich der Anteil an Halogenen und / oder Halogenverbindungen in der mehrschichtigen Stoffbahn deutlich reduzieren oder zum Teil ganz eliminieren.

Als erfindungsgemäße Flammschutzmittel können hierbei alle der fachkundigen Person bekannten halogen- und antimontrioxid-freien Flammschutzmittel verwendet werden. Es kommen hierbei insbesondere Stannate, wie Zinkstannat oder Zinkhydroxystannat, Hydroxide, wie Magnesiumhydroxid oder Aluminiumhydroxid, Cyanurate, wie Melamincyanurat, Borate, wie Zinkborat, phosphorhaltige Komponenten, wie Resorcinoldiphosphat oder aromatische Polyphosphate, stickstoffhaltige Komponenten, wie Ammoniumphosphat, Intumeszenzgemische, Carbonate, wie Calciumcarbonat oder Magnesiumcarbonat, oder Blähgraphit in Frage.
Intumeszenzgemische blähen zu Schäumen auf. Sie werden benutzt, um brennbare Materialien wie Kunststoffe oder Holz, aber auch Stahl, der bei erhöhter Temperatur seine Festigkeit einbüßt, gegen die Einwirkung von Wärme und Feuer zu schützen. Als besonders gut geeignet haben sich Stannate, insbesondere Zinkhydroxystannat (ZHS), gezeigt. ZHS ist besonders ungefährlich für den Menschen, so dass keine besonderen Sicherheitsmaßnahmen erforderlich sind. Gleichzeitig ist es mittlerweile deutlich einfacher und kostengünstiger auf dem Markt verfügbar und unabhängiger von Rohstoffpreisen- und verknappung als Antimontrioxid. Des Weiteren zeigen sich bei der Verwendung von ZHS keine Verschlechterung der physikalischen Eigenschaften und eine Verbesserung der Flammschutzeigenschaften.
Eine gute Haftung der einzelnen Schichten der mehrschichtigen Stoffbahn wird erzielt, wenn wenigstens die Kautschukschichten, die sich in direktem Kontakt zu den vorhandenen Festigkeitsträgerschichten befinden, mit dem halogen- und antimontrioxidfreien Flammschutzmittel ausgestattet sind. Bevorzugt sollte wenigstens die Deckgummierung mit dem halogen- und antimontrioxid-freien Flammschutzmittel ausgestattet sein.
Die genannten halogen- und antimontrioxid-freien Flammschutzmittel können hierbei alleine oder in Kombination verwendet werden.
Die Gesamtmenge an halogen- und antimontrioxid-freien Flammschutzmittel beträgt bevorzugt 1 bis 150 phr, besonders bevorzugt 50 bis 100 phr.
Die Kautschukschicht enthält wenigstens eine Kautschukkomponente, die ausgewählt ist aus der Gruppe, bestehend aus Nitrilkautschuk (NBR) und / oder (teil)hydrierter Nitrilkautschuk (HNBR) und / oder Fluor-Kautschuk (FKM) und / oder Chloropren-Kautschuk (CR) und / oder Butylkautschuk (IIR) und / oder Brombutylkautschuk (BIIR) und / oder Chlorbutylkautschuk (CIIR) und / oder Butadien-Kautschuk (BR) und / oder Chloriertes Polyethylen (CM) und / oder Chlorsulfoniertes Polyethylen (CSM) und / oder Polyepichlorhydrin (ECO) und / oder Ethylen-Vinylacetat-Kautschuk (EVA) und / oder Acrylat-Kautschuk (ACM) und / oder Ethylen-Acrylat-Kautschuk (AEM) und / oder perfluorinierter Propylen-Kautschuk (FFPM) und/ oder Perfluorcarbon-Kautschuk (FFKM).

Die genannten Kautschuke können hierbei alleine oder im Verschnitt eingesetzt werden. Von besonderer Bedeutung in Kombination mit dem halogen- und antimontrioxid-freien Flammschutzmittel, insbesondere für Faltenbälge, sind halogenhaltige oder halogenierte Kautschuke, wie insbesondere CR und CSM. Hierbei zeigen sich besonders gute Synergien hinsichtlich der physikalischen Eigenschaften, insbesondere bei Verwendung von ZHS als Flammschutzmittel.
Die üblichen Mischungsingredienzien der Kautschukschicht umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoff (z.B. Farbpigmente). Diesbezüglich wird auf den allgemeinen Stand der Kautschukmischungstechnologie verwiesen.

Die erfindungsgemäß vorhandene Festigkeitsträgerschicht kann als Filz, Vlies, Gewebe, Geflecht, Gewirk oder Gestrick, Gelege ausgebildet sein. Es ist auch möglich, dass die Festigkeitsträgerschicht aus Komponenten aus Filz, Vlies, Gewebe, Geflecht, Gewirk oder Gestrick, Gelege ausgebildet ist.
Als Materialien für die Festigkeitsträgerschicht können alle der fachkundigen bekannten und geeigneten Materialien verwendet werden, die bevorzugt ausgewählt sind aus der Gruppe, bestehend aus: Polyamid (PA), z.B. PA6, PA6.6, PA11, PA12, PA6.10, PA6.12, und / oder Copolyamide und / oder Polyester (PES) und / oder Rayon und / oder Polyethylenterephthalat (PET) und / oder Polyethylennaphthalat (PEN) und / oder Polybutylenterephthalat (PBT) und / oder Polycarbonat (PC) und / oder ungesättigtes Polyesterharz (UP) und / oder Poly(1,4-cyclohexandimethylenterephthalat) (PCDT) und / oder Baumwolle und / oder Zellwolle und / oder Polyvinylalkohol (PVAL) und / oder Polyoxibenzonaphtoat und / oder Polyvinylacetal (PVA) und / oder Polyetheretherketon (PEEK) und / oder Polyethylen-2,6-naphthalat (PEN) und / oder Polyphenylen und / oder Polyphenylenoxid (PPO) und / oder Polyphenylensulfid (PPS) und / oder Polphenylenether und / oder Polybenzoxazol (PBO) und / oder Polyoxadiazol (POD) und / oder Polyetherimid (PEI) und / oder m-Aramid und / oder p-Aramid und / oder Glas und / oder Basalt und / oder Metall und / oder Carbon und / oder Keramik und / oder Kohlenstoff und / oder Wolle und / oder Baumwolle und / oder Polypropylen und / oder Melamin und / oder modifizierte Viskose und / oder Gestein und / oder hochkristalline Polymerfasern und / oder Fluorpolymere, wie bspw. Fluorsilikon, Polytetrafluorethylen (PTFE) und Perfluorethylenpropylen (FEP), und /oder Fluor-Copolymere, wie bspw. Poly(vinylidenfluorid-co-hexafluorpropylen) (VDF/HFP), Poly(vinylidenfluorid-co-hexafluorpropylen-co-tetrafluorethylen) (TFB), Poly(vinylidenfluorid-co-tetrafluorethylen-co-perfluormethylvinylether) (VDF/TFE/PMVE), Poly(tetrafluorethylen-co-propylen) (TFE/P) und Poly(vinylidenfluorid-co-chlortrifluorethylen) (VDF/CTFE).

Die Materialien für die Festigkeitsträgerschicht können hierbei alleine oder in Kombination verwendet werden, d.h. es sind auch so genannte Hybridsysteme möglich. Als Hybridsysteme sind z. B. Kombinationen aus Polyester (PES) oder Polyamid (PA) mit Polyphenylensulfid (PPS) und / oder Polphenylenether und / oder Polybenzoxazol (PBO) und / oder Polyoxadiazol (POD) und / oder Polyetherimid (PEI) und / oder m-Aramid und / oder p-Aramid und / oder Glas besonders gut geeignet.
Polyphenylensulfid (PPS) und / oder Polphenylenether und / oder Polybenzoxazol (PBO) und / oder Polyoxadiazol (POD) und / oder Polyetherimid (PEI) und / oder m-Aramid und / oder p-Aramid und / oder Glas zeichnen sich durch eine hohe Temperaturbeständigkeit (und Chemikalienbeständigkeit) aus und verbessern dadurch die Brandeigenschaften des Gewebes. Die Kombination mit Polyester (PES) oder Polyamid (PA) macht das Hybridsysteme kostengünstig und reduziert negative Eigenschaften wie z. B. die reduzierte Reißdehnung der hochtemperaturbeständigen Fasern.

Die Erfindung wird nun anhand von Ausführungsbeispielen unter Bezugnahme auf Vergleichs- und Ausführungsbeispiele und zwei schematische Zeichnungen erläutert.
Die Vergleichs- und Ausführungsbeispielen sind in Tabelle 1 zusammengefasst. Die mit "E" gekennzeichneten Mischungen sind hierbei erfindungsgemäße Mischungen, während es sich bei den mit "V" gekennzeichneten Mischungen um Vergleichsmischungen handelt. Die mit "a" gekennzeichnete Tabelle stellt dabei die Mischungszusammensetzungen für Kautschukmischungen für die Deckplatte (Deck) einerseits und Zusammensetzungen für die Haftschicht (Haft) andererseits dar, während die mit "b" und "c" gekennzeichneten Tabellen die dazugehörigen entsprechenden physikalischen Eigenschaften bzw. das Brandverhalten illustrieren. Der Flammtest wurde in Anlehnung an DIN ISO 340 durchgeführt und das Brandverhalten subjektiv bewertet.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Die Mischungsherstellung erfolgte unter üblichen Bedingungen mit Hilfe eines Laborwalzwerks. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Rückprallelastizität bei Raumtemperatur und 70°C gemäß DIN 53 512
- Shore-A-Härte bei Raumtemperatur gemäß DIN 53 505
- Reißdehnung bei Raumtemperatur gemäß DIN 53 504
- Abrieb bei Raumtemperatur gemäß DIN/ISO 4649

**Tabelle 1a**

| **Bestandteile** | **Einheit** | **Deck(V)** | **Deck(E)** | **Haft(V)** | **Haft(E)** |
|---|---|---|---|---|---|
| CSM / BR / CM | phr | 100 | -- | | |
| CSM / CM | phr | -- | 100 | | |
| CR | phr | -- | -- | 100 | 100 |
| Füllstoffe^{a} | phr | 80-90 | 80-90 | 10-30 | 20-40 |
| Weichmacher | phr | 5-15 | 5-15 | 0-10 | 5-15 |
| Antimontrioxid | phr | 5-15 | -- | 5-15 | -- |
| ZHS | phr | -- | 10-20 | -- | 10-20 |
| Zusatzstoffe^{c} | phr | 15-25 | 25-35 | 10-20 | 10-20 |
| Vulkanisationssystem | phr | 0,5-5 | 0,5-5 | 0,5-5 | 0,5-5 |

| | | | | | |
|---|---|---|---|---|---|
| ^{a} Carbonate, Oxide, Hydroxide, Silikate ^{c} Stearinsäure, Titandioxid, Wachse, Ozonschutz, etc. | | | | | |

**Tabelle 1b**

| **Eigenschaft** | **Einheit** | **Deck(V)** | **Deck(E)** | **Haft(V)** | **Haft(E)** |
|---|---|---|---|---|---|
| Härte | Shore A | 64 | 79 | 55 | 52 |
| Abrieb | mm³ | 395 | 341 | 216 | 275 |
| Rückprall bei 70°C | % | 32 | 21 | 45 | 50 |
| Reißdehnung | % | 580 | 491 | 809 | 805 |

**Tabelle 1c**

| | | Deck(V) | Deck(E) |
|---|---|---|---|
| Tropfverhalten | tropft nicht | | x |
| | tropft | x | |
| Rauchentwicklung | **zu Beginn** | | |
| | hell und wenig | x | x |
| | **am Ende** | | |
| | hell und wenig | | x |
| | dunkel und mittel bis stark | x | |
| Zerstörungsgrad | gering | | x |
| | hoch | x | |
| Nachbrennzeit | in Sekunden | vergleichbar | vergleichbar |
| | | | |

| | | Haft(V) | Haft(E) |
|---|---|---|---|
| Tropfverhalten | tropft nicht | | |
| | tropft | | |
| Rauchentwicklung | **zu Beginn** | | |
| | trüb und stark | | x |
| | dunkel und stark | x | |
| | **am Ende** | | |
| | trüb und stark | | x |
| | dunkel und stark | x | |
| Zerstörungsgrad | gering | | |
| | hoch | | |
| Nachbrennzeit | in Sekunden | 0 | 0 |

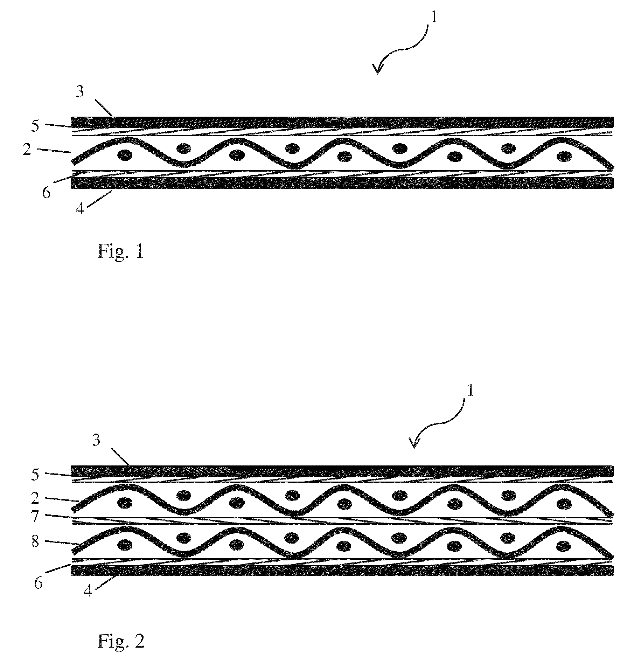

Nach Figur 1 umfasst die Stoffbahn 1 insgesamt fünf Schichten. Die mittig angeordnete Festigkeitsträgerschicht 2 ist eingebettet von zwei Schichten 3 und 4, die aus einer Kautschukmischung bestehen, die wenigstens ein Flammschutzmittel, welches frei von Halogenen bzw. Halogenverbindungen und frei von Antimon bzw. Antimonverbindungen ist, enthält. Die Schichten 3 und 4 bilden jeweils die Deckschichten. Zwischen der Festigkeitsträgerschicht 2 und den beiden Deckschichten 3 und 4 ist jeweils eine Haftschicht 5 und 6 vorhanden. Die Haftschichten 5 und 6 sind wiederum Kautschukschichten, die zum einen durch geeignete Haftmittel haftend ausgerüstet sind und zur Erhöhung der flammhemmenden Eigenschaften ebenso mit wenigstens einem Flammschutzmittel, welches frei von Halogenen bzw. Halogenverbindungen und frei von Antimon bzw. Antimonverbindungen ist, enthalten. Auf diese Weise wird ein hochbelastbarer Elastomer-Gewebe-Verbund gebildet.

Nach Figur 2 umfasst die Stoffbahn 1 insgesamt sieben Schichten. Die mittig angeordneten beiden Festigkeitsträgerschichten 2 und 8 sind eingebettet von zwei Schichten 3 und 4, die aus einer Kautschukmischung bestehen, die wenigstens ein Flammschutzmittel, welches frei von Halogenen bzw. Halogenverbindungen und frei von Antimon bzw. Antimonverbindungen ist, enthält. Die Schichten 3 und 4 bilden jeweils die Deckschichten. Zwischen den Festigkeitsträgerschichten 2 und 8 und zwischen jeweils einer Festigkeitsträgerschicht 2 oder 8 und jeweils einer Deckschicht 3 oder 4 ist jeweils eine Haftschicht 5, 6 und 7 vorhanden. Die Haftschichten 5, 6 und 7 sind wiederum Kautschukschichten, die zum einen durch geeignete Haftmittel haftend ausgerüstet sind und zur Erhöhung der flammhemmenden Eigenschaften ebenso mit wenigstens einem Flammschutzmittel, welches frei von Halogenen bzw. Halogenverbindungen und frei von Antimon bzw. Antimonverbindungen ist, enthalten. Auf diese Weise wird ein hochbelastbarer Elastomer-Gewebe-Verbund gebildet.

### Bezugszeichenliste

### (Teil der Beschreibung)

- 1: mehrschichtige Stoffbahn
- 2: Festigkeitsträgerschicht, insbesondere Gewebeschicht
- 3: Kautschukschicht
- 4: Kautschukschicht
- 5: Haftschicht
- 6: Haftschicht
- 7: Haftschicht
- 8: Festigkeitsträgerschicht, insbesondere Gewebeschicht

## Patentansprüche

1. Mehrschichtige Stoffbahn (1), umfassend wenigstens eine eingebettete Festigkeitsträgerschicht (2, 8) und wenigstens eine Schicht auf Basis wenigstens eines Kautschuks (3, 4, 5, 6, 7), **dadurch gekennzeichnet, dass** wenigstens eine Schicht auf Basis wenigstens eines Kautschuks wenigstens ein Flammschutzmittel enthält, wobei das Flammschutzmittel frei von Halogenen bzw. Halogenverbindungen und frei von Antimon bzw. Antimonverbindungen ist und wobei der Kautschuk ausgewählt ist aus der Gruppe bestehend aus Nitrilkautschuk (NBR) und / oder (teil)hydrierter Nitrilkautschuk (HNBR) und / oder Fluor-Kautschuk (FKM) und / oder Chloropren-Kautschuk (CR) und / oder Butylkautschuk (IIR) und / oder Brombutylkautschuk (BIIR) und / oder Chlorbutylkautschuk (CIIR) und / oder Butadien-Kautschuk (BR) und / oder Chloriertes Polyethylen (CM) und / oder chlorsulfoniertes Polyethylen (CSM) und / oder Polyepichlorhydrin (ECO) und / oder Ethylen-Vinylacetat-Kautschuk (EVA) und / oder Acrylat-Kautschuk (ACM) und / oder Ethylen-Acrylat-Kautschuk (AEM) und / oder perfluorinierter Propylen-Kautschuk (FFPM) und/ oder Perfluorcarbon-Kautschuk (FFKM).

2. Mehrschichtige Stoffbahn (1) nach Anspruch 1, **dadurch gekennzeichnet, dass** das Flammschutzmittel ausgewählt ist aus der Gruppe bestehend aus Zinkstannat und / oder Zinkhydroxystannat und / oder Magnesiumhydroxid und / oder Aluminiumhydroxid und / oder Melamincyanurat und / oder Zinkborat und / oder Blähgraphit und / oder phosphorhaltige Verbindungen und / oder stickstoffhaltige Verbindungen und / oder Intumeszenzgemische.

3. Mehrschichtige Stoffbahn (1) nach Anspruch 2, **dadurch gekennzeichnet, dass** das Flammschutzmittel Zinkstannat und / oder Zinkhydroxystannat ist.

4. Mehrschichtige Stoffbahn (1) nach einem der Ansprüche 1 bis 3, **dadurch gekennzeichnet, dass** die Gesamtmenge an Flammschutzmitteln 1 bis 150 phr beträgt.

5. Mehrschichtige Stoffbahn (1) nach einem der Ansprüche 1 bis 4, **dadurch gekennzeichnet, dass** der Kautschuk halogeniert ist und / oder ein Halogen enthält.

6. Mehrschichtige Stoffbahn (1) nach Anspruch 5, **dadurch gekennzeichnet, dass** der Kautschuk Chloroprenkautschuk (CR) und / oder chlorsulfoniertes Polyethylen (CSM) ist.

7. Mehrschichtige Stoffbahn (1) nach einem der Ansprüche 1 bis 6, **dadurch gekennzeichnet, dass** die Stoffbahn (1) fünfschichtig ausgebildet ist, und zwar umfassend eine mittig angeordnete Festigkeitsträgerschicht (2), eine erste und zweite flammhemmende Kautschukschicht (3, 4) und eine erste und zweite Haftschicht (5, 6).

8. Mehrschichtige Stoffbahn (1) nach einem der Ansprüche 1 bis 7, **dadurch gekennzeichnet, dass** die Festigkeitsträgerschicht (2) ein Polyestergewebe oder ein Polyamidgewebe oder ein Hybridsystem ist.

9. Mehrschichtige Stoffbahn (1) nach einem der Ansprüche 1 bis 8, **dadurch gekennzeichnet, dass** sie als Faltenbalg oder Schutzanzugstoff ausgebildet ist.

## Claims

1. Multilayered web (1) comprising at least one embedded strength member layer (2, 8) and at least one layer based on at least one rubber (3, 4, 5, 6, 7), **characterized in that** at least one layer based on at least one rubber contains at least one flame retardant, wherein the flame retardant is free from halogens and/or halogen compounds and free from antimony and/or antimony compounds and wherein the rubber is selected from the group consisting of nitrile rubber (NBR) and/or (partially) hydrogenated nitrile rubber (HNBR) and/or fluororubber (FKM) and/or chloroprene rubber (CR) and/or butyl rubber (IIR) and/or bromobutyl rubber (BIIR) and/or chlorobutyl rubber (CIIR) and/or butadiene rubber (BR) and/or chlorinated polyethylene (CM) and/or chlorosulphonated polyethylene (CSM) and/or polyepichlorohydrin (ECO) and/or ethylene-vinyl acetate rubber (EVA) and/or acrylate rubber (ACM) and/or ethylene-acrylate rubber (AEM) and/or perfluorinated propylene rubber (FFPM) and/or perfluorocarbon rubber (FFKM).

2. Multilayered web (1) according to Claim 1, **characterized in that** the flame retardant is selected from the group consisting of zinc stannate and/or zinc hydroxystannate and/or magnesium hydroxide and/or aluminium hydroxide and/or melamine cyanurate and/or zinc borate and/or expandable graphite and/or phosphorus-containing compounds and/or nitrogen-containing compounds and/or intumescent mixtures.

3. Multilayered web (1) according to Claim 2, **characterized in that** the flame retardant is zinc stannate and/or zinc hydroxystannate.

4. Multilayered web (1) according to any of Claims 1 to 3, **characterized in that** the total amount of flame retardants is in the range from 1 to 150 phr.

5. Multilayered web (1) according to any of Claims 1 to 4, **characterized in that** the rubber is halogenated and/or contains a halogen.

6. Multilayered web (1) according to Claim 5, **characterized in that** the rubber is chloroprene rubber (CR) and/or chlorosulphonated polyethylene (CSM).

7. Multilayered web (1) according to any of Claims 1 to 6, **characterized in that** the web (1) has a five-layered configuration comprising a central strength member layer (2), first and second flame-retardant rubber layers (3, 4) and first and second bonding layers (5, 6).

8. Multilayered web (1) according to any of Claims 1 to 7, **characterized in that** the strength member layer (2) is a woven polyester fabric, a woven polyamide fabric or a hybrid system.

9. Multilayered web (1) according to any of Claims 1 to 8, **characterized in that** it is configured into a folding bellows or a protective suit material.

## Revendications

1. Bande de tissu multicouche (1), comprenant au moins une couche support solide incorporée (2, 8) et au moins une couche à base d'au moins un caoutchouc (3, 4, 5, 6, 7), **caractérisée en ce qu'**au moins une couche à base d'au moins un caoutchouc contient au moins un agent ignifuge, l'agent ignifuge étant exempt d'halogènes ou de composés halogénés et exempt d'antimoine ou de composés d'antimoine, et le caoutchouc étant choisi dans le groupe constitué par le caoutchouc de nitrile (NBR) et/ou le caoutchouc de nitrile (partiellement) hydrogéné (HNBR) et/ou le caoutchouc fluoré (FKM) et/ou le caoutchouc de chloroprène (CR) et/ou le caoutchouc de butyle (IIR) et/ou le caoutchouc de bromobutyle (BIIR) et/ou le caoutchouc de chlorobutyle (CIIR) et/ou le caoutchouc de butadiène (BR) et/ou le polyéthylène chloré (CM) et/ou le polyéthylène chlorosulfoné (CSM) et/ou la polyépichlorhydrine (ECO) et/ou le caoutchouc d'éthylène-acétate de vinyle (EVA) et/ou le caoutchouc d'acrylate (ACM) et/ou le caoutchouc d'éthylène-acrylate (AEM) et/ou le caoutchouc de propylène perfluoré (FFPM) et/ou le caoutchouc perfluorocarboné (FFKM).

2. Bande de tissu multicouche (1) selon la revendication 1, **caractérisée en ce que** l'agent ignifuge est choisi dans le groupe constitué par le stannate de zinc et/ou l'hydroxystannate de zinc et/ou l'hydroxyde de magnésium et/ou l'hydroxyde d'aluminium et/ou le cyanurate de mélamine et/ou le borate de zinc et/ou le graphite expansé et/ou les composés contenant du phosphore et/ou les composés contenant de l'azote et/ou les mélanges intumescents.

3. Bande de tissu multicouche (1) selon la revendication 2, **caractérisée en ce que** l'agent ignifuge est le stannate de zinc et/ou l'hydroxystannate de zinc.

4. Bande de tissu multicouche (1) selon l'une quelconque des revendications 1 à 3, **caractérisée en ce que** la quantité totale d'agents ignifuges est de 1 à 150 pce.

5. Bande de tissu multicouche (1) selon l'une quelconque des revendications 1 à 4, **caractérisée en ce que** le caoutchouc est halogéné et/ou contient un halogène.

6. Bande de tissu multicouche (1) selon la revendication 5, **caractérisée en ce que** le caoutchouc est le caoutchouc de chloroprène (CR) et/ou le polyéthylène chlorosulfoné (CSM).

7. Bande de tissu multicouche (1) selon l'une quelconque des revendications 1 à 6, **caractérisée en ce que** la bande de tissu (1) est configurée à cinq couches, et comprend une couche support solide agencée au centre (2), une première et une seconde couche de caoutchouc ignifuge (3, 4) et une première et une seconde couche adhésive (5, 6).

8. Bande de tissu multicouche (1) selon l'une quelconque des revendications 1 à 7, **caractérisée en ce que** la couche support solide (2) est un tissu en polyester ou un tissu en polyamide ou un système hybride.

9. Bande de tissu multicouche (1) selon l'une quelconque des revendications 1 à 8, **caractérisée en ce qu'**elle est configurée sous la forme d'un soufflet ou d'un matériau pour vêtements de protection.
